# EUROPEAN PATENT APPLICATION

(11) **EP 2 249 069 A1**
(43) Date of publication of application: **10.11.2010**
(21) Application number: 09706574.2
(22) Date of filing: 21.01.2009
(51) Int. Cl.: F16K 17/02, H01M 2/12, H01M 8/04

(54) **RELIEF VALVE**

(30) Priority: 29.01.2008 JP 2008017735
(71) Applicant: The Japan Steel Works, Ltd., Tokyo 141-0032 (JP); Asahi Rubber Inc., Saitama 330-0801 (JP)
(72) Inventor: FUNATSU, Kyohei, Muroran-shi Hokkaido 051-8505 (JP); SATO, Yukio, Muroran-shi Hokkaido 051-8505 (JP); KAWAHARAZAKI, Yoshinori, Muroran-shi Hokkaido 051-8505 (JP); SHIBUKAWA, Koichi, Muroran-shi Hokkaido 051-8505 (JP); WATANABE, Youichirou, Saitama-shi Saitama 330-0801 (JP); NEMOTO, Masashi, Saitama-shi Saitama 330-0801 (JP); YAMASHITA, Takeo, Saitama-shi Saitama 330-0801 (JP)
(74) Representative: Collin, Jérôme
(86) International application number: PCT/JP2009/050824
(87) International publication number: WO 2009/096277

(57) **Abstract**

A safety valve function is obtained through pressing and arranging an elastic body against a hole of a container containing hydrogen absorbing alloy or the like. A relief valve includes an elastic body (4) joined to a hole (3) of a container (1) and a retainer plate (6) for pressing the elastic body, and has a configuration in which, when a pressure of hydrogen or the like contained in the container (1) rises, gas or the like is released to the outside from a boundary between an outer surface (3a) of the hole (3) and the elastic body (4) through a relief hole (5) for the gas or the like of the retainer plate (6).

## Description

### Technical Field

The present invention relates to a relief valve, and also relates to a novel improvement for obtaining a relief valve function through placing and pressing an elastic body onto a hole of a container containing hydrogen absorbing alloy, gas, or liquid.

### Background Art

Conventionally, there has been developed a technology of utilizing, as a hydrogen source of hydrogen utilizing equipment as typified in a fuel cell, hydrogen absorbing alloy capable of storing hydrogen compactly at low pressure. Further, there has been adopted an apparatus used in another field, for releasing a pressure similarly to a general pressure container when a pressure of a hydrogen storage container is increased.
For example, there has been devised a spring relief valve for controlling a relief amount of the pressure through varying a pressing force applied to a spring. The spring relief valve has been adopted also in the hydrogen storage container.
Further, in each of Patent Documents 1 and 2 in which intended use is limited to a sealed storage battery, the following structure is disclosed. Specifically, an upper portion of a valve body is slightly increased in size and is restrained, which allows easy positioning. An elastic body has double structures, and has both a function of sealing an internal pressure and a function of serving as a relief valve along with pressure rise.

Further, in a similar sealed configuration described in Patent Document 3, the following structure is disclosed. Specifically, a cylindrical elastic body is used, which allows a simple shape. A peripheral margin is formed, and hence an escape path for pressure is reliably ensured.
Further, in a configuration described in Patent Document 4 relating to a non-aqueous electrolyte secondary battery, the following structure is disclosed. Specifically, a pressure is released through a periphery of a retainer plate when the pressure is low, and an elastic body is ejected when the pressure rises rapidly, to thereby obtain a structure excellent in gas discharge.
Further, in each of the conventional patents using the elastic body as described above, through changing a size of the elastic body to be placed and a size of a pressure relief hole, the elastic body and the pressure relief hole are used as means for controlling a relief pressure.
Further, a film type has been suggested for another non-aqueous electrolyte secondary battery. This is used as means for releasing an internal pressure in such as a manner that a thinned portion breaks to open when the internal pressure exceeds a predetermined pressure.

Patent Document 1: JP 2005-347130 A
Patent Document 2: JP 2003-045393 A
Patent Document 3: JP 2001-126696 A
Patent Document 4: JP 07-37568 A

### Disclosure of the Invention

### Problems to be solved by the Invention

The conventional relief valve is configured as described above, and thus has the following problems.
Conventionally, as the relief valve that has been adopted for the hydrogen storage container, there is used a spring type apparatus for controlling the relief amount of the pressure through varying the pressing force applied to the spring. The spring type apparatus has a complex structure. Thus, the spring type apparatus has the following disadvantages. Specifically, it is extremely difficult to achieve a size small enough to allow a person to carry in hand or a portable size, in particular, a size small enough to correspond to the hydrogen storage container that has been gradually required to be reduced in size, such as a fuel cell tank for a mobile phone or a fuel cell tank used for a portable power supply device.
Further, in the configuration described in each of Patent Documents 1 and 2, the upper portion of the valve body is slightly increased in size and is positioned, and the elastic body has double structures and has both a sealing property and a releasing property. However, there is a problem in that the elastic body itself and a structure for positioning are complex and hence it is difficult to maintain a structure for corresponding to the hydrogen storage container being reduced in size.
Further, in the configuration described in Patent Document 3, the cylindrical elastic body is used, which allows a simple shape. However, the peripheral margin is formed in order to ensure the escape path for pressure, and hence it is difficult to perform positioning to close the pressure relief hole due to a size of the pressure relief hole. In addition, the structure in which the escape path for pressure is excessively increased is adopted, and hence the relief valve is exposed to the outside, which leads to a risk in that foreign matters, etc. are accumulated around the relief valve to affect a relief pressure of the relief valve. As a matter of course, if a cover is placed around the relief valve, countermeasures are taken against the foreign matters. However, the structure becomes complex and disadvantageous to a small container.

Further, in the configuration described in Patent Document 4, the foreign matters are unlikely to enter, and the structure excellent in pressure release is adopted. However, there are disadvantages that the elastic body is exposed in order to deal also with rapid pressure rise and that reuse is difficult because the elastic body is ejected.
Note that, in the relief valve disclosed in each of the conventional patents, accuracy is not required in terms of a range of controlling the pressure, and the elastic body may have a size large enough not to be affected by molding error. However, in a case of using a small elastic body that is seriously affected by the molding error, it is difficult to obtain a relief valve capable of controlling the pressure with high accuracy.
Further, in a case of the thin film type, the control of an operating pressure is easy. However, there is a problem in that reuse is impossible once the operation is performed.
Therefore, the present invention has been made to solve the above-mentioned problems such as difficulty in downsizing and positioning of the elastic body, easy intrusion of the foreign matters from the outside into the relief valve, bad reusability, and difficulty in controlling the relief pressure with high accuracy in the small relief valve. It is an object of the present invention to obtain a relief valve that overcomes the above-mentionedproblems, has a highly available structure, and that is capable of corresponding to a reusable container.

### Means for solving the Problems

A relief valve according to the present invention includes: a container containing hydrogen absorbing alloy, gas, or liquid; a recess portion formed in the container; a hole formed in a bottom surface of the recess portion, said hole communicates into an inside of the container; an elastic body provided onto an outer surface of the hole, for closing the hole; and a retainer plate for urging the elastic body toward the hole. The gas or the liquid is discharged to an outside from a boundary between the outer surface of the hole and the elastic body through a relief hole or a groove for the gas or the liquid which is provided in the retainer plate, or through a clearance formed between the retainer plate and the container when a pressure of the gas or the liquid contained in the container rises. Further, the container includes an in-and-out valve for the gas or the liquid, and an assembly body including the hole, the elastic body, and the retainer plate, and the in-and-out valve and the assembly body are either provided together at the same end of the container, or provided respectively and separately at separate ends. Further, the container includes a canister containing the hydrogen absorbing alloy, the gas, or the liquid, an in-and-out valve for the gas or the liquid is provided to a cylinder body connected to a tip of the canister, and the hole, the elastic body, and the retainer plate are provided to a wall of the cylinder body. Further, the retainer plate includes, in order to urge the retainer plate toward the elastic body, a screw body, a hollow screw body, or a grooved screw body which is screwed into a screw hole or a grooved screw hole communicated to the hole, and the screw body, the hollow screw body, or the grooved screw body allows a compression state of the elastic body to be variable. Further, the container is fixed to a joint or a valve attached to a separate container which is provided separately from the container, containing hydrogen absorbing alloy, gas, or liquid, and an internal pressure of the separate container containing the hydrogen absorbing alloy, the gas, or the liquid is released through a guide port provided in the joint or the valve to be communicated to the outside. Further, the retainer plate comprises the relief hole or the groove for the gas or the liquid. Further, the elastic body includes any one of a column, an elliptic column, a sphere, a polygonal column, a trapezoidal column, a stepped column, a column with a rib formed on an outer periphery thereof, an elliptic column with a rib formed on an outer periphery thereof, a sphere with a rib formed on an outer periphery thereof, a polygonal column with a rib formed on an outer periphery thereof, a trapezoidal column with a rib formed on an outer periphery thereof, a stepped column with a rib formed on an outer periphery thereof, a column with a groove formed on an outer periphery thereof, an elliptic column with a groove formed on an outer periphery thereof, a sphere with a groove formed on an outer periphery thereof, a polygonal column with a groove formed on an outer periphery thereof, a trapezoidal column with a groove formed on an outer periphery thereof, and a stepped column with a groove formed in an outer periphery thereof. The recess portion receiving the elastic body is formed into a polygonal column or a column having an inscribed circle equal to or slightly larger than a circumscribed circle of the elastic body, and the sectional shape of the polygonal column or the column has a sectional shape which is incongruent with or dissimilar to a sectional shape of the elastic body.

### Effects of the Invention

The relief valve according to the present invention is configured as described above, and hence it is possible to obtain the following effects.
That is, in the present invention, the elastic body different from the conventionally-used spring type is adopted, and the structure is simplified. Thus, the present invention has the effect of having a safety function corresponding to reduction in size and cost of the container.
Further, with respect to the cylindrical recess portion, not the cylindrical elastic body or the like having a circular cross section, but the elastic body having a polygonal cross section is adopted. Alternately, with respect to the polygonal recess portion, the elastic body having a cross section incongruent with or dissimilar to that of the recess portion is adopted. As a result, when the elastic body is placed, it is possible to easily perform positioning with a diagonal of the elastic body or the recess portion, and to reliably close the pressure relief hole without requiring an attention of an operator, which leads to an improvement in productivity. In addition, the clearance is formed between the recess portion and the elastic body, and hence the effect of ensuring an escape path for pressure is obtained.
Further, when the elastic body is pressed by the retainer plate having a reduced clearance and the elastic body is prevented from being exposed as much as possible, the elastic body itself becomes less affected by external environment such as foreign matters. Moreover, not only there is reduced an influence on an operation of the valve, but also there is reduced a risk in that the foreign matters enter a sealing surface of the clearance between the elastic body and the container or the retainer plate when the valve is operated. Thus, reproducibility of the relief pressure in repetition of the operation is increased. Note that, in a case of a container having a somewhat large size, after placement, through incorporating a mechanism of the screw body, the hollow screw body, or the grooved screw body capable of varying a compressibility of the elastic body, it becomes possible to control an operating pressure of the relief valve without being affected by factors such as heat history of the elastic body, dimensional error in a placement position, and dimensional error of the elastic body itself.
Further, it becomes possible to properly control the operating pressure of the relief valve in the container containing the hydrogen absorbing alloy within a small range unit of 0.5 MPa or less, for example, a range of from 3.5 to 4.0 MPa. Specifically, by means that the compound, shape, dimension, hardness, etc. of the elastic body are adjusted, and the spring constant of the elastic body is changed, and also the compressibility of the elastic body is varied, as a result, it becomes possible to properly control the operating pressure of the relief valve.
Further, the conventional thin film type is not used, but the elastic body is adopted as a valve body. Thus, it is possible to provide a safety function with reproducibility.

### Brief Description of the Drawings

[FIG. 1] A sectional view of a relief valve according the present invention.
[FIG. 2] An enlarged plan view of a retainer plate illustrated FIG. 1.
[FIG. 3] A plan view of a retainer plate according to another mode of FIG. 2.
[FIG. 4] A plan view of a retainer plate according to another mode of FIG. 3.
[FIG. 5] A plan view of a surface of a retainer plate according to another mode of FIG. 2, with which an elastic body is held in contact.
[FIG. 6] A plan view of a retainer plate according to another mode of FIG. 2.
[FIG. 7] A plan view of a surface of a retainer plate according to another mode of FIG. 2, with which the elastic body is held in contact.
[FIG. 8] A plan view of a surface of a retainer plate according to another mode of FIG. 7, with which the elastic body is held in contact.
[FIG. 9] A sectional view of a relief valve according another embodiment of the present invention.
[FIG. 10] An enlarged sectional view of an assembly body 30 illustrated in FIG. 9.
[FIG. 11] An exploded view of FIG. 10.
[FIG. 12] An enlarged plan view of the elastic body illustrated in FIG. 1.
[FIG. 13] A plan view of an elastic body according to another mode of FIG. 12.
[FIG. 14] A plan view of an elastic body according to another mode of FIG. 13.
[FIG. 15] A plan view of an elastic body according to another mode of FIG. 14.
[FIG. 16] A plan view of an elastic body according to another mode of FIG. 12.
[FIG. 17] A plan view of an elastic body according to another mode of FIG. 16.
[FIG. 18 ] A configuration diagram of a container according to another mode of FIG. 1.
[FIG. 19] A configuration diagram of a container according to another mode of FIG. 18.
[FIG. 20] A view of an elastic body exemplifying those illustrated in FIGS. 12 to 15.
[FIG. 21] A view of an elastic body according to another mode of FIG. 20.
[FIG. 22] A view of an elastic body according to another mode of FIG. 21.
[FIG. 23] A view of an elastic body exemplifying those illustrated in FIGS. 12 to 15.
[FIG. 24] A view of an elastic body according to another mode of FIG. 23.
[FIG. 25] A view of an elastic body according to another mode of FIG. 24.
[FIG. 26] A view of a retainer plate according to another mode of FIG. 2.
[FIG. 27] A perspective view of a grooved screw hole according to another mode of FIG. 9.
[FIG. 28] A perspective view of a grooved screw body according to another mode of FIG. 9.
[FIG. 29] A perspective view of a hollow screw body 25 illustrated in FIG. 9.
[FIG. 30] A perspective view of a screw body according to another mode of FIG. 9.

### Best Modes for carrying out the Invention

It is an object of the present invention to provide a relief valve in which a safety valve function is obtained through placing and pressing an elastic body onto a hole of a container containing hydrogen absorbing alloy or the like.

### Embodiment

In the following, a relief valve according to preferred embodiments of the present invention is described with reference to the drawings.

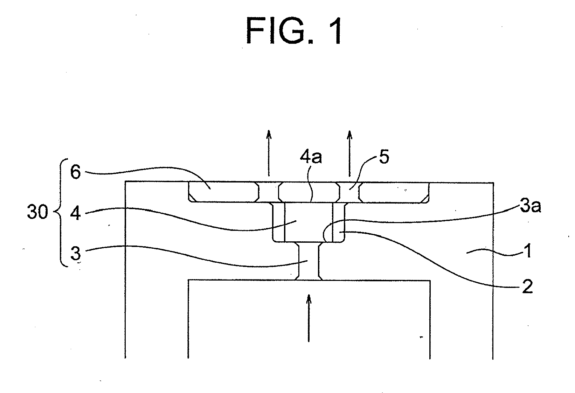

FIG. 1 illustrates a container denoted by a reference numeral 1, which contains hydrogen absorbing alloy (not shown). The container 1 may be made of any metal such as aluminum or various kinds of steel as long as the metal has suitable strength and toughness. Further, the container 1 may include a container obtained through mixing, depending on a kind of gas, metal with plastics or engineering plastics such as nylon satisfying strength and toughness.

A recess portion 2 is formed in an upper portion of the container 1, and a through hole 3 is formed at a center position in a bottom portion of the recess portion 2. An elastic body 4 made of an elastic material such as rubber is provided on the hole 3 to close the hole 3.

Over the recess portion 2, a flat plate-like retainer plate 6 having gas relief holes 5 or grooves 6c formed therein is provided to close the recess portion 2. Through pressing an upper surface 4a of the elastic body 4 by the retainer plate 6, the elastic body 4 is urged to close the hole 3. Note that, there may be adopted a structure in which, instead of the relief holes 5, a slight clearance 7 through which pressure is released is provided between the container and the retainer plate 6.

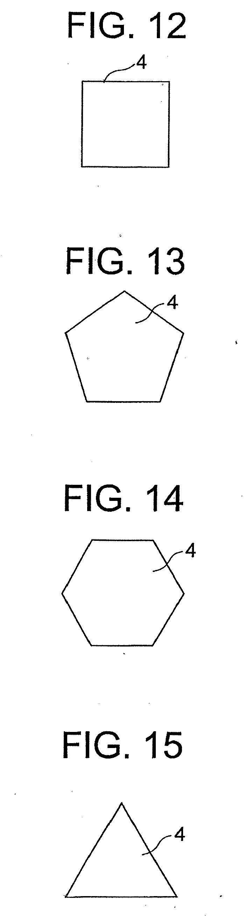

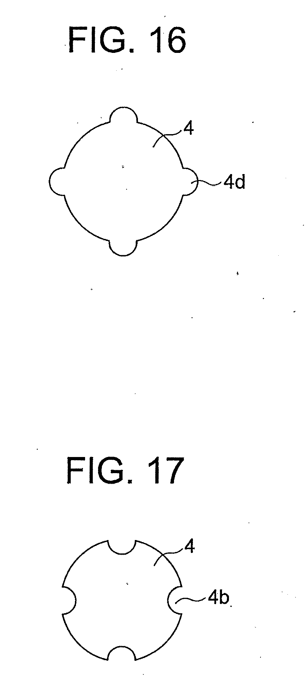

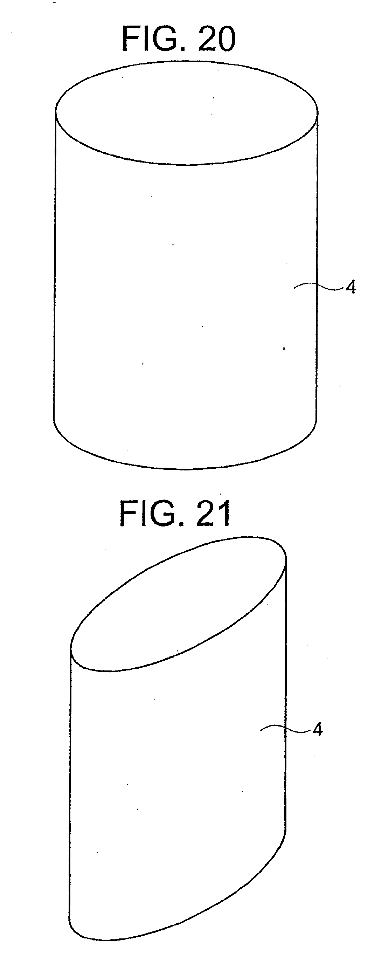

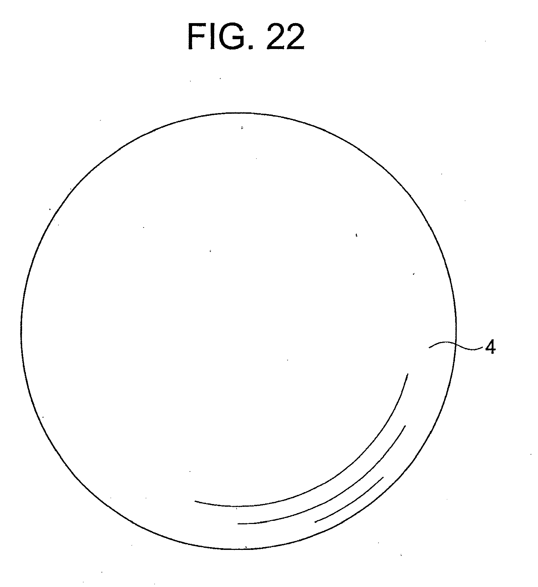

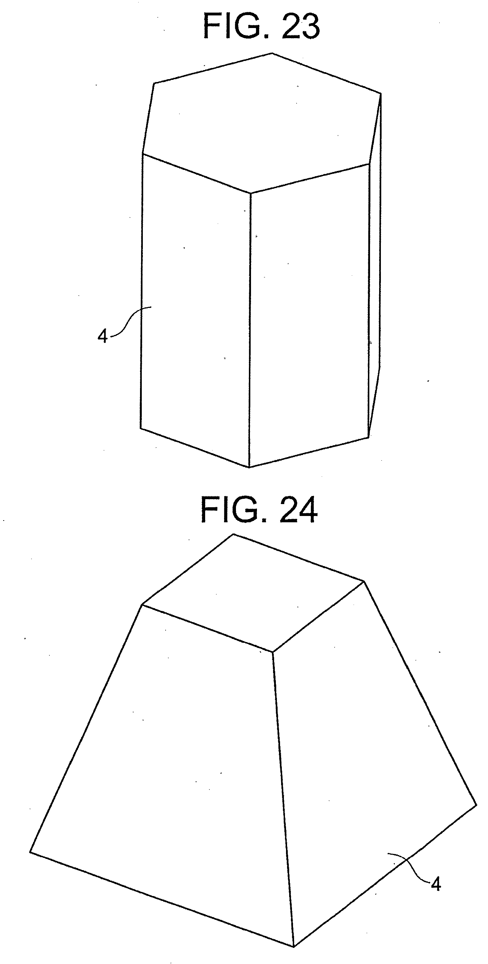

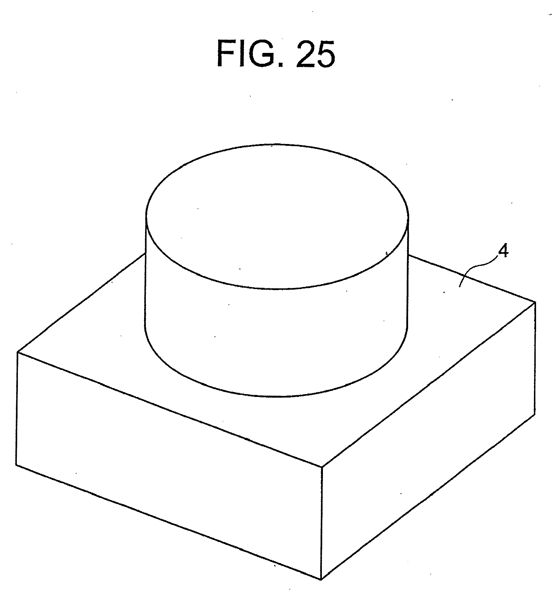

The elastic body 4 is formed of a rubber molded article or the like. In practice, as illustrated in FIGS. 16, 17, and 20 to 25 , a variety of shapes may be adopted, such as a column illustrated in FIG. 20, an elliptic column illustrated in FIG. 21, a sphere illustrated in FIG. 22, a polygonal column illustrated in FIG. 23, a trapezoidal column illustrated in FIG. 24, a stepped column illustrated in FIG. 25, a column illustrated in FIG. 16 which has ribs 4d formed on an outer periphery thereof, and a column illustrated in FIG. 17 which has grooves 4b formed on an outer periphery thereof. Note that, the polygonal column illustrated in FIG. 23 exemplifies shapes such as a square column illustrated in FIG. 12, a pentagonal column illustrated in FIG. 13, a hexagonal column illustrated in FIG. 14, and a triangular column illustrated in FIG. 15. The example illustrated in FIG. 16 or 17 is applicable not only to the column but also to an elliptic column, a sphere, a polygonal column, a trapezoidal column, a stepped column (not shown), etc.
Further, the recess portion 2 and the elastic body 4 have different sectional shapes from each other, and thus side walls of the recess portion 2 and the elastic body 4 are not held in close contact with each other, and are configured so that the side walls of the recess portion 2 and the elastic body 4 are capable of ensuring an escape path for gas pressure. The gas relief holes 5 opened in the retainer plate 6 are closed by a larger diameter portion in cross section of the elastic body 4. However, the gas relief holes 5 are situated outside a smaller diameter portion of the elastic body 4 (at positions radially outward than a radius of the smaller diameter). Thus, even if any one of a plurality of gas relief holes is closed by the larger diameter portion of the elastic body 4, gas relief holes close to a smaller diameter portion of the elastic body are communicated to a space of the recess portion 2.
Further, a larger diameter in cross section of the elastic body 4 is set to be substantially equal to or slightly smaller than an inner diameter of the recess portion 2 serving as a receiving hole. As a result, in incorporating work of the elastic body 4, it is possible to easily perform positioning, and to efficiently perform assembly. A size of the elastic body 4 can be determined according to a desired size of the container 1. Even when the elastic body 4 has a size of 0.5 mm to 2.0 mm long, 0.5 mm to 2.0 mm wide, and 0.5 mm to 2.0 mm high as a size capable of corresponding to a small container, it is possible to obtain a relief valve capable of controlling the pressure with high accuracy.
A material of the elastic body 4 is not particularly limited as long as the material is chemically stable with respect to gas or liquid, is capable of blocking the gas or the liquid between the retainer plate 6 and the container 1, and exhibits compressive elasticity through being pressed by the retainer plate 6. Examples of the rubber include natural rubber and synthetic rubber such as ethylene-propylene-diene terpolymer, butadiene rubber, isoprene rubber, styrene-butadiene rubber, acrylonitrile-butadiene rubber, chloroprene rubber, silicone rubber, fluororubber, urethane rubber, and chloroprene rubber. Further, examples of thermoplastic elastomer include styrene-based elastomer, olefin-based elastomer, urethane-based elastomer, polyester-based elastomer, and polyamide-based elastomer. Preferably, the elastic body 4 contains silicone rubber as a major constituent which has a stable elastic modulus and compression set characteristic in a use temperature range wide enough to be allowed to be used under a temperature difference between summer and winter and in tropical regions or cool regions, and which is excellent in molding accuracy.

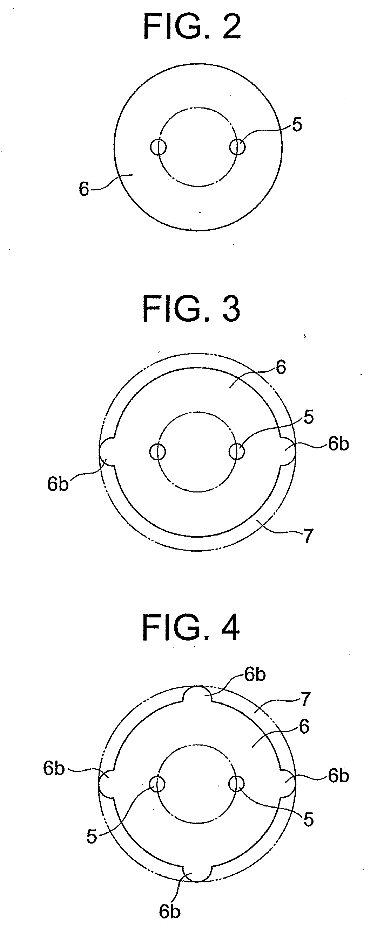

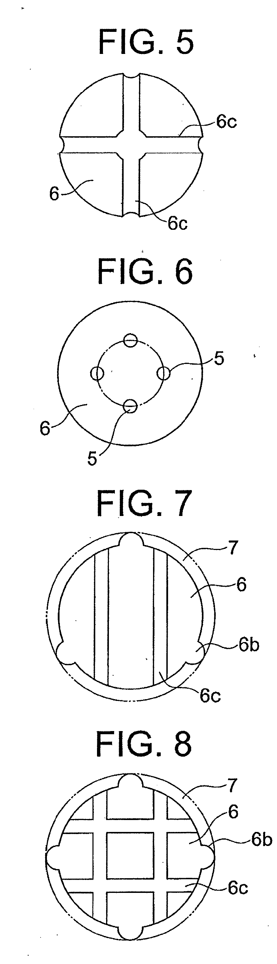

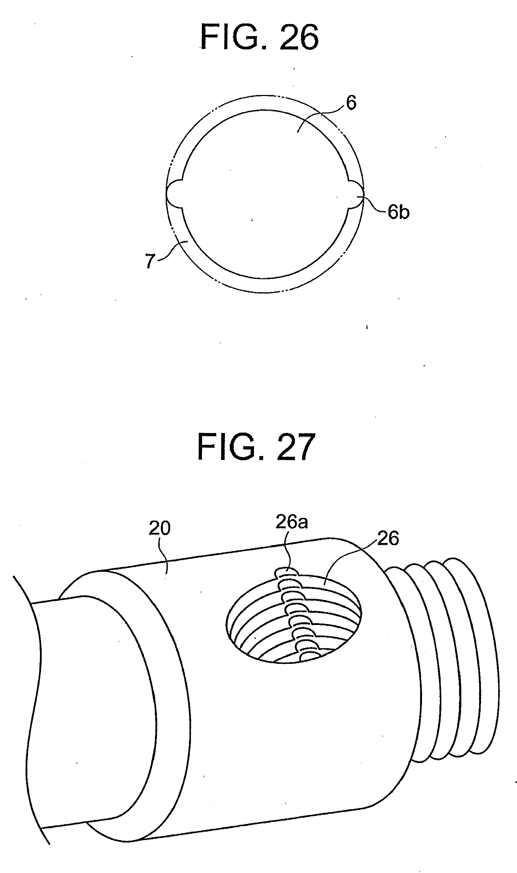

The retainer plate 6 has a configuration illustrated in FIGS. 2 to 8 and 26. FIG. 2 illustrates a retainer plate having a disk shape and including two gas relief holes 5 formed therein. FIG. 3 illustrates a retainer plate including a pair of ribs 6b on an outer periphery thereof. FIG. 4 illustrates a retainer plate including four ribs 6b on an outer periphery thereof. FIG. 6 illustrates a retainer plate including four gas relief holes 5 formed therein. FIG. 5 illustrates a retainer plate including grooves 6c formed therein into a cross shape, the retainer plate including similar grooves in a side surface of the retainer plate 6 intersecting the grooves 6c as needed. FIG. 7 illustrates a retainer plate including two straight grooves 6c formed therein and three ribs 6b formed on an outer periphery thereof. FIG. 8 illustrates a retainer plate including grooves 6c formed therein into a grid shape and four ribs 6b formed on an outer periphery thereof. FIG. 26 illustrates a retainer plate including two ribs 6b formed on an outer periphery thereof. The gas is discharged to the outside through the gas relief holes 5 or the grooves 6c or the clearance 7 formed between the retainer plate 6 and the container 1.
Further, in a case where the retainer plate 6 is fitted onto the container 1 so that a top surface of the retainer plate 6 and a surface of the container are flush with each other, owing to provision of the ribs 6b as illustrated in FIGS. 3, 4, 7, 8, and 26, the clearance 7 is formed between the side surface of the retainer plate 6 and the container 1, and at the same time, the retainer plate 6 is easily placed at a predetermined position.
Note that, the same operation may be obtained through providing a clearance, through which the gas is slightly discharged, in a coupling portion between the retainer plate 6 and the container 1 without providing the gas relief holes 5 or the grooves 6c in the retainer plate 6 as illustrated in FIG. 26. Alternatively, the configurations illustrated in FIGS. 2 to 8 and 26 may be combined.

Therefore, when a pressure of hydrogen contained in a tank in the container 1 rises in the configuration illustrated in FIG. 1, the gas at high pressure presses the elastic body 4 outward through the hole 3, and thus the gas forms a clearance between an outer surface 3a of the hole 3 and the elastic body 4, and is guided into the recess portion 2 through the thus formed clearance, to thereby be discharged to the outside through the relief holes 5. As a result, the pressure of hydrogen contained in the tank in the container 1 falls, and thus breakage or the like of the container 1 is prevented. In addition, the elastic body 4 closes the hole 3 again to be held in close contact with the hole 3, and discharge of the gas is stopped. Thus, preparation is made for next pressure rise.

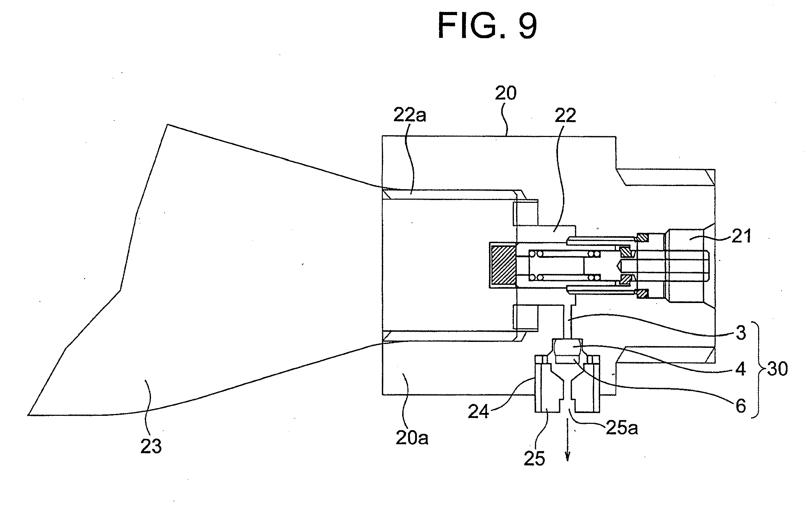

Next, another embodiment of the present invention is described with reference to FIGS. 9 to 11, 27, and 28. Note that, the same portions as those illustrated in FIG. 1 are denoted by the same symbols.
FIG. 9 illustrates a canister denoted by a reference numeral 23, which serves as a container similar to the container 1. Acylinder body 20 connected to a tip of the canister 23 is provided with an in-and-out valve 21. The tip of the canister 23 for supplying hydrogen is inserted into receiving holes 22 and 22a of the cylinder body 20 in which the in-and-out valve 21 is held. Thus, there is made such a configuration that it is possible to charge and discharge hydrogen gas through the cylinder body 20.

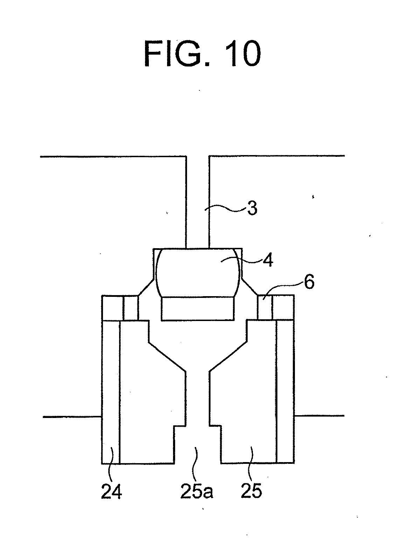

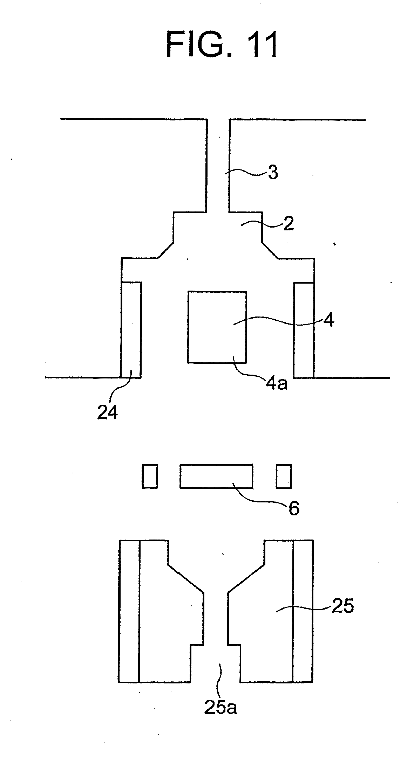

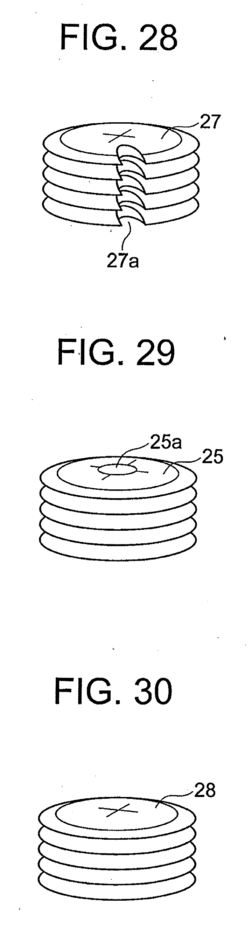

A hole 3 (corresponding to the hole 3 of FIG. 1) is formed in a wall 20a of the cylinder body 20 to be communicated to the receiving hole 22, and is formed to be communicated to a screw hole 24 or a grooved screw hole 26 which is open outward.
The elastic body 4 made of rubber or the like is provided with respect to the hole 3, and is pressed by the retainer plate 6. The retainer plate 6 is pressed toward the hole 3 by a hollow screw body 25 screwed into the screw hole 24. Thus, there is obtained a configuration in which, depending on a screwed state of the hollow screw body 25, it is possible to vary a compression state of the elastic body 4 with respect to pressing the hole 3.
Note that, the above-mentioned configuration is illustrated in FIGS. 10 and 11 in an enlarged manner.
Further, instead of discharging the gas through a hollow hole 25a of the hollow screw body 25, in FIG. 27, even when a normal screw body 28 is screwed into the grooved screw hole 26 obtained by forming grooves 26a with a sufficient depth in the screw hole 24 along an axial direction of the screw hole, it is possible to provide a similar gas discharge function. In FIG. 28, even when, instead of the hollow screw body 25, a grooved screw body 27, which has grooves 27a with a sufficient depth formed in its side surface along an advancing direction of the screw, is screwed into the normal screw hole 24, it is possible to provide a similar gas discharge function.
Further, even when, instead of the hollow screw body 25, the grooved screw body 27 or the normal screw body 28 is used, depending on the screwed state of the screw body, it is possible to vary the compression state of the elastic body 4 with respect to the hole 3 due to pressing.
Note that, according to circumstances, the screw body 28, the hollow screw body 25, or the grooved screw body 27 may has a function of the retainer plate 6.

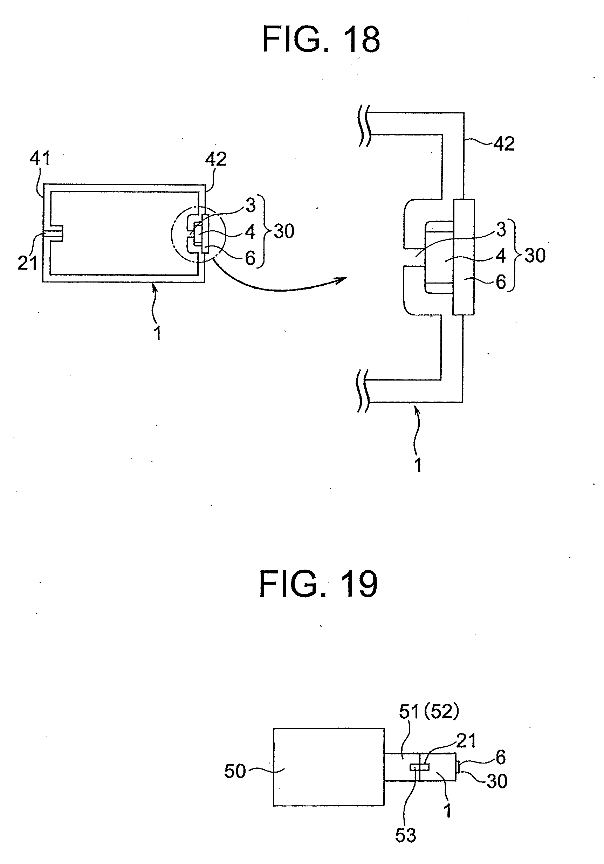

The container 1 according to another mode is entirely shaped into a circular cylinder or a rectangular cylinder, for example, as illustrated in FIG. 18. One end 41 of the container 1 is provided with the in-and-out valve 21 through which hydrogen is charging and discharging. The other end 42 of the container 1, which is opposed to the one end 41 along a longitudinal direction thereof, is provided with an assembly body 30 including the hole 3, the elastic body 4, and the retainer plate 6 illustrated in FIG. 1. The in-and-out valve 21 and the assembly body 30 are respectively and separately provided at the separate ends 41 and 42 so that hydrogen is charging and discharging on the one end 41 side whereas the gas is released on the other end 42 side. Although not shown, the in-and-out valve 21 and the assembly body 30 can be provided together at the same one end 41 or the same other end 42.

Further, FIG. 19 illustrates a configuration according to another mode of the present invention. In the configuration, the container 1 illustrated in FIG. 18 is connected and fixed to a joint 51 or a valve 52 attached to a separate container 50 which is provided independently from the container 1 and is formed of a large hydrogen storage container or the like. Thus, it is possible to release the pressure of gas contained in the hydrogen storage container 50 through a guide port 53 which is provided in the joint 51 or the valve 52 to be communicated to the outside, and to discharge the gas to the outside through the hole 3, the elastic body 4, the relief holes 5 of the retainer plate 6, and the like which are provided to the container 1.

Note that, the relief valve of the present invention can be used not only for a container containing the hydrogen absorbing alloy but also, similarly to the above-mentioned container, for a container containing: another gas; liquid including volatile liquefied gas such as liquefied propane gas, liquid nitrogen, or liquid carbon dioxide; or volatile liquid used as a fuel, such as methanol, ethanol, butyl alcohol, or gasoline, which has a large coefficient of volume expansion.

## Claims

1. A relief valve, comprising:
a container (1) containing hydrogen absorbing alloy, gas, or liquid;
a recess portion (2) formed in the container (1);
a hole (3) formed in a bottom surface of the recess portion (2), said hole (3) communicates into an inside of the container (1);
an elastic body (4) provided onto an outer surface (3a) of the hole (3), for closing the hole (3); and
a retainer plate (6) for urging the elastic body (4) toward the hole (3),
wherein the gas or the liquid is discharged to an outside from a boundary between the outer surface (3a) and the elastic body (4) through a relief hole (5) or a groove (6c) for the gas or the liquid which is provided in the retainer plate (6), or through a clearance (7) formed between the retainer plate (6) and the container (1) when a pressure of the gas or the liquid contained in the container (1) rises.

2. A relief valve according to claim 1, wherein:
the container (1) comprises an in-and-out valve (21) for the gas or the liquid, and an assembly body (30) comprising the hole (3), the elastic body (4), and the retainer plate (6); and
the in-and-out valve (21) and the assembly body (30) are either provided together at the same end (41 or 42) of the container (1), or provided respectively and separately at separate ends (41 and 42).

3. A relief valve according to claim 1, wherein:
the container (1) comprises a canister (23) containing the hydrogen absorbing alloy, the gas, or the liquid;
an in-and-out valve (21) for the gas or the liquid is provided to a cylinder body (20) connected to a tip of the canister (23); and
the hole (3), the elastic body (4) and the retainer plate (6) are provided to a wall (20a) of the cylinder body (20).

4. A relief valve according to claim 3, further providing, in order to urge the retainer plate (6) toward the elastic body (4), a screw body (28), a hollow screw body (25), or a grooved screw body (27) which is screwed into a screw hole (24) or a grooved screw hole (26) communicated to the hole (3),
wherein the screw body (28), the hollow screw body (25), or the grooved screw body (27) allows a compression state of the elastic body (4) to be variable.

5. A relief valve according to any one of claims 1 to 4, wherein:
the container (1) is fixed to a joint (51) or a valve (52) attached to a separate container (50) which is provided separately from the container (1), containing hydrogen absorbing alloy, gas, or liquid; and
an internal pressure of the separate container (50) containing the hydrogen absorbing alloy, the gas, or the liquid is released through a guide port (53) provided in the joint (51) or the valve (52) to be communicated to the outside.

6. A relief valve according to any one of claims 1 to 5, wherein the retainer plate (6) comprises the relief hole (5) or the groove (6c) for the gas or the liquid.

7. A relief valve according to any one of claims 1 to 6, wherein the elastic body (4) comprises any one of a column, an elliptic column, a sphere, a polygonal column, a trapezoidal column, a stepped column, a column with a rib (4d) formed on an outer periphery thereof, an elliptic column with a rib (4d) formed on an outer periphery thereof, a sphere with a rib (4d) formed on an outer periphery thereof, a polygonal column with a rib (4d) formed on an outer periphery thereof, a trapezoidal column with a rib (4d) formed on an outer periphery thereof, a stepped column with a rib (4d) formed on an outer periphery thereof, a column with a groove (4b) formed on an outer periphery thereof, an elliptic column with a groove (4b) formed on an outer periphery thereof, a sphere with a groove (4b) formed on an outer periphery thereof, a polygonal column with a groove (4b) formed on an outer periphery thereof, a trapezoidal column with a groove (4b) formed on an outer periphery thereof, and a stepped column with a groove (4b) formed in an outer periphery thereof.

8. A relief valve according to any one of claims 1 to 7, wherein:
the recess portion (2) is formed into a polygonal column or a column having an inscribed circle equal to or slightly larger than a circumscribed circle of the elastic body (4); and the sectional shape of the polygonal column or the column has a sectional shape which is incongruent with or dissimilar to a sectional shape of the elastic body(4).
